# EUROPEAN PATENT APPLICATION

(11) **EP 1 111 879 A1**
(43) Date of publication of application: **27.06.2001**
(21) Application number: 99125551.4
(22) Date of filing: 21.12.1999
(51) Int. Cl.: H04M 1/247, H04M 1/274, G06F 3/023

(54) **Portable communication device with a scrolling means for scrolling through a two-dimensional array of characters**

(71) Applicant: Sony International (Europe) GmbH, 50829 Köln (DE)
(72) Inventor: Ripart, Lionel, Heisenbergbogen 1, 85609 Aschheim (DE)
(74) Representative: Körber, Martin, Dipl.-Phys.

(57) **Abstract**

Portable communication device (1) for a wireless communication system, with a display means (2) for displaying information, and a scrolling means (6) for scrolling through a menu or other information displayed on the display means (2), whereby in an editing mode of the communication device in which characters to be stored and/or to be transmitted can be selected, so that the display means (2) displays a plurality of characters in a two-dimensional array, whereby one-dimensional sequences of characters are highlighted one after the other upon activating the scrolling means (6) and, after selecting a sequence of characters, single characters in that selected sequence are highlighted one after the other upon activating the scrolling means (6) so that a wanted character can be selected.

The present invention thereby enables to quickly and simply select and add a wanted character out of a two-dimensional array of characters using the scrolling means.

## Description

The present invention relates to a portable communication device for a wireless communication system with a display means for displaying information and a scrolling means for scrolling through a menu or other information displayed on the display means.

Portable communication devices having a display means and a scrolling means are known in many different variations. E.g. EP 0 726 668 A1 discloses such a portable communication device having a rotary key or jog dial, respectively, as a scrolling means for scrolling through information displayed on the display means. Thereby, the jog dial can be used to scroll through a vertical list of information, such as names in a telephone book, or for scrolling horizontally through a horizontal sequence of information, such as characters, displayed on the display means. A respective piece of information, such as a character, a name or an operation mode, which may be selected upon clicking (pressing) the jog dial or pressing a respective enter key are highlighted on the display so that the user knows which piece of information out of the displayed information list can actually be selected.

However, a scrolling means such as a jog dial or rotary key only allows to scroll through a list or sequence of displayed pieces of information in a one-dimensional way. This one-directional movement can either be a vertical movement (upward and downward) or a horizontal movement (leftward or rightward). Scrolling through a two-dimensional array of pieces of information, such as characters, using such a scrolling means is time-consuming and user-unfriendly, since line after line of the two-dimensional array has to be scrolled through character by character so that e.g every character has to be scrolled through when the character to be selected is located at the end of the array.

The object of the present invention is therefore to provide a portable communication device for a wireless communication system with a display means for displaying information and a scrolling means for scrolling through a menu or other information displayed on the display means, which allows to scroll-through and select characters from a two-dimensional array of characters displayed on the display means in a simple and efficient way.

The above object is achieved by a portable communication device for a wireless communication system according to claim 1, with a display means for displaying information, and a scrolling means for scrolling through a menu or other information displayed on the display means, whereby, in an editing mode of said communication device in which characters to be stored and/or to be transmitted can be selected, said display means displays a plurality of characters in a two-dimensional array, whereby one-dimensional sequences of characters are highlighted one after the other upon activating the scrolling means and, after selecting a sequence of characters, single characters in that selected sequence are highlighted one after the other upon activating the scrolling means so that a wanted character can be selected.

It is to be noted that the term character in the present case comprises alphabetic characters, numeric characters and/or every other possible symbol which can be displayed on the display means of a portable communication device. The present invention allows to scroll through and select characters from a displayed two-dimensional array of characters in an easy and simple way, since in a first step sequences of characters are scrolled through roughly and then, upon selecting a sequence of characters, the single characters in that selected sequence are scrolled through one after the other in a second step so that a wanted character can be selected very quickly. This has the big advantage that one or more keys of a keypad of the portable communication device can be allocated to two-dimensional arrays of characters in an text editing mode so that the characters to be selected can be chosen from a big variety of different characters displayed on the display means at the same time. In other words, more characters can be displayed at the same time and a quick and easy selection of a wanted character can be performed.

Advantageously, the two-dimensional array displayed on the display means in said editing mode comprises horizontal and vertical sequences of characters, whereby horizontal sequences of characters are highlighted one after the other upon activating the scrolling means.

Alternatively, the two-dimensional array displayed on the display means in said editing mode comprises horizontal and vertical sequences of characters, whereby vertical sequences of characters are highlighted one after the other upon activating the scrolling means.

It is to be noted, that the term highlighted can mean that black characters on a white background may be inverted into white characters on a black background, the characters may be shown bigger than the other characters or the characters may be displayed as bold characters, whereby any other way of highlighting or marking sequences of characters or single characters may be used.

Advantageously, the scrolling means is a jog dial or rotary key, respectively, which can be turned clockwise and counterclockwise to scroll through pieces of information displayed on the display means. In this case, it is further advantageous if, upon turning said jog dial, one-dimensional sequences of characters are highlighted one after the other in a first or second direction, and, after selecting a sequence of characters, single characters are highlighted one after the other in a third or fourth direction, said third or fourth direction being perpenticular to said first and second direction. For example, said first and second direction may be the upward and downward direction, respectively, and the third and fourth direction may be the left and right direction, respectively. Further advantageously, the sequence of characters is selected by pressing or clicking on said jog dial. Alternatively, a separate selection or enter key may be used to select the sequence of characters.

Further advantageously, the portable communication device according to the present invention comprises a keypad with a plurality of keys, whereby in said editing mode said two-dimensional array of characters is allocated to and can be selected by activating a specific key. In case that the portable communication device according to the present invention is a mobile telephone, which has an alphanumeric keypad with some additional keys, such as the pound (#) sign, a two-dimensional array of characters e.g. including Greek characters, bracket symbols and the like can be allocated to the pound key. Additionally, further two-dimensional arrays of characters can be allocated to some of the other keys.

In the following description, a preferred embodiment of the present invention is explained in more detail in relation to the enclosed drawings, in which
figure 1 shows a schematic top view of a portable communication device for a wireless communication system according to the present invention,
figure 2 shows a schematic view of a display of a portable communication device according to the present invention in different states of an editing mode for explaining the scrolling through a two-dimensional array of characters according to the present invention,
figure 3 shows a schematic view of a display means of a portable communication device according to the present invention in different states of an editing mode in a flowchart-like representation to explain the scrolling through a two-dimensional array of characters according to the present invention, and
figure 4 shows a schematic block diagram of a portable communication device according to the present invention.

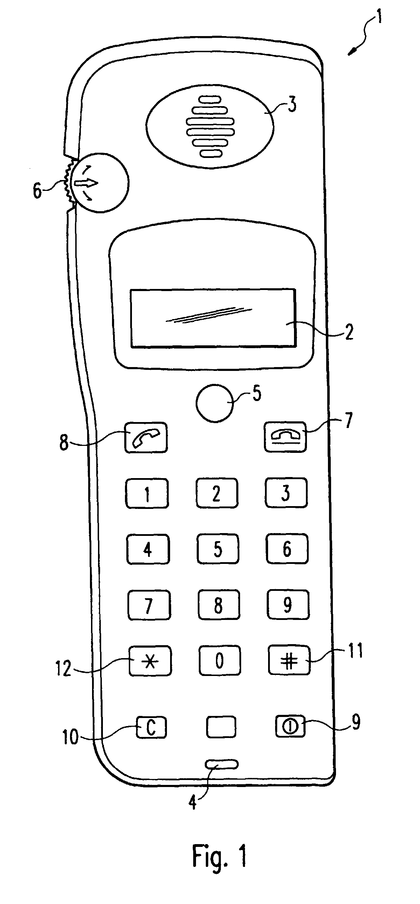

Figure 1 shows a schematic top view of a portable telephone 1 for a wireless telecommunication system as e.g. the GSM or UMTS system. Although the following description solely relates to a portable telephone, the portable communication device for a wireless communication system according to the present invention may also be any other device like a portable laptop computer, portable palmtop computer or the like comprising functions for communicating data in a wireless communication system. However, the present invention is particularly advantageous for portable communication devices which can be held and operated with a single hand.

The portable telephone 1 shown in figure 1 comprises a display means 2, on which pieces of information like characters, menu items, text information, names or the like can be displayed. The portable telephone 1 further comprises a loudspeaker 3 on the upper front part and a microphone 4 on the lower front part of the casing. Further, an enter or menu key 5 as enter means for selecting a respective menu item or function is provided. The portable telephone 1 further comprises the usual ten alphanumeric keys (numbers 0 to 9), a communication start key 8, a communication end key 7, a pound key 11, a star key 12, a power on/off key 9 and a clear key 10. Further, the portable telephone 1 comprises a jog dial 6, which is a rotatable key, a part of which is exposed to the outside. The exposed part can be touched by the finger of a user's hand and may be rotated clockwise (upwardly) or counterclockwise (downwardly) to scroll through pieces of information displayed on the display means 2. Preferably, the display means 2 of the portable telephone 1 comprises a graphical display, which has a higher resolution than usual text or character displays.

A piece of information displayed on the display means 2, as e.g. a character, a menu function, a name, a telephone number or the like can be selected by pressing or clicking the jog dial 6 inwardly or by pressing the enter key 5 depending on the configuration of the telephone 1.

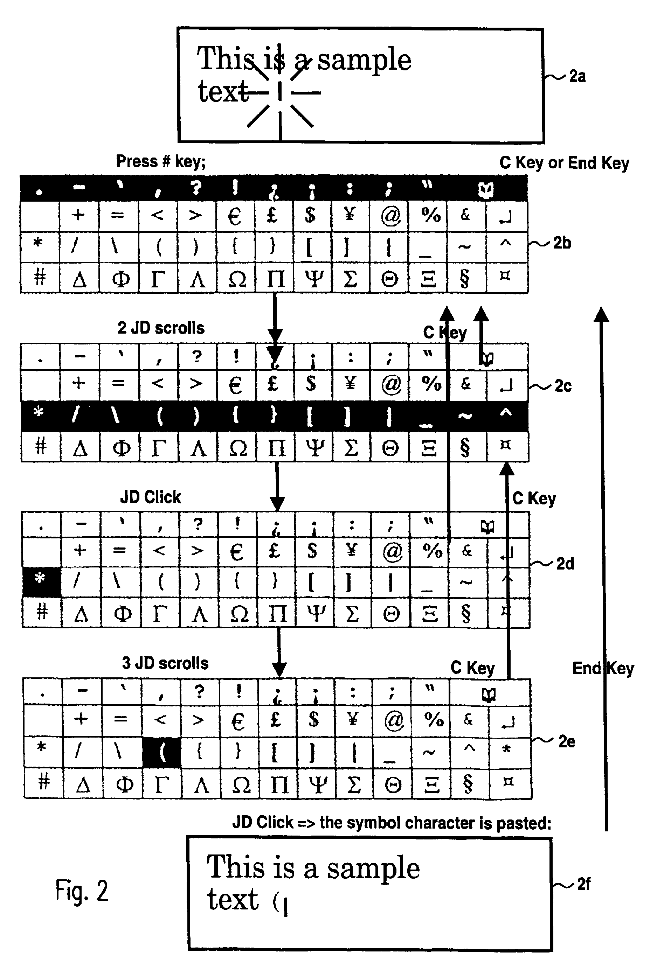

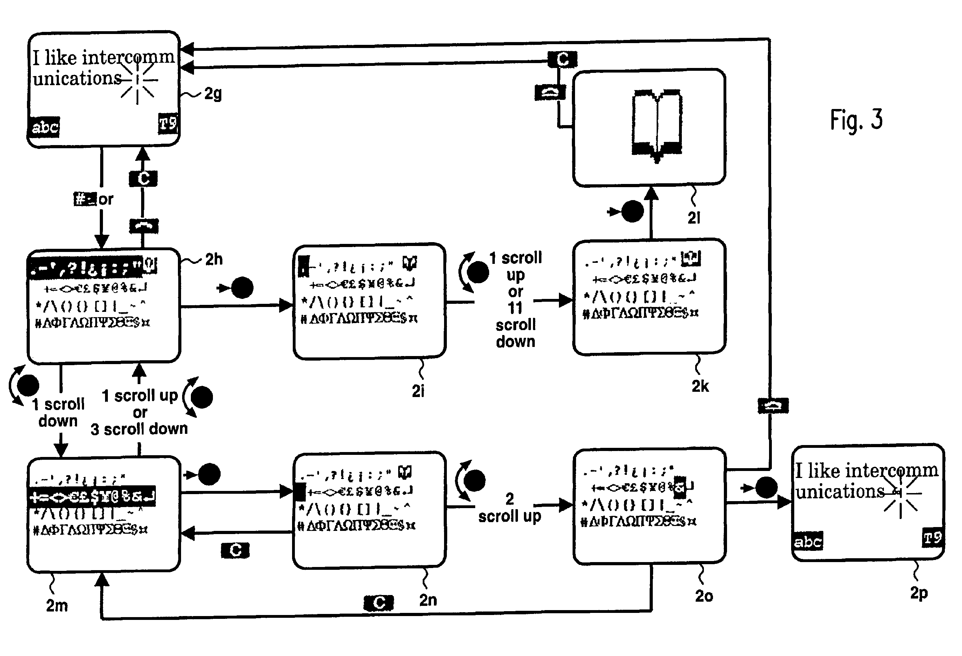

In figures 2 and 3, schematic views of different states of the display means 2 in an editing mode explain the scrolling through a two-dimensional array of characters according to the present invention. The editing mode of the portable telephone 1 may e.g. be a SMS message editing mode, in which SMS messages are written, a telephone book editing mode in which names and/or terms are written and stored together with telephone numbers or any other editing mode in which alphabetic characters, numeric characters, and/or all possible kinds of symbols are used to write or create a text, an image or the like by scrolling through and selecting characters from a selection of characters stored in the portable telephone 1.

Figure 2 shows the display means 2 of the portable telephone 1 in different states of an editing mode. For example, the editing mode is an editing mode for editing SMS messages. The first display 2a shown in figure 2 displays a sample text "This is a sample text". Then, the user wishes to add a further character to the text and therefore presses the pound key (# key). Thereafter, a two-dimensional array of characters allocated to the pound key appears (display 2b). In the shown example, the two-dimensional array of characters displayed on the display 2b comprises horizontal and vertical sequences of characters (columns and lines of characters), whereby horizontal sequences (lines) of characters are highlighted one after the other upon turning the jog dial 6 of the portable telephone 1 up and down. As can be seen in the display 2b of figure 2, the first horizontal sequence of characters is highlighted by inverting the usually black characters on a white background into white characters on a black background. After turning the jog dial 6 of the portable telephone 1 two times downwardly, the third horizontal sequence of characters is reached as shown in display 2c in figure 2. By pressing or clicking the jog dial 6, the respective horizontal sequence, in this case the third horizontal sequence, is selected, so that single characters in that selected sequence can be scrolled through one by one using the jog dial 6. This is shown in the displays 2d and 2e of figure 2. In figure 2d, the third horizontal sequence had just been selected so that the first character of this third horizontal sequence is highlighted. After scrolling the jog dial 6 three times, the fourth character of the third horizontal sequence is reached, which is the "(" symbol. Pressing or clicking the jog dial 6 in this position selects the symbol, which is then added to the text being currently created or edited, as shown in the display 2f of figure 2. From every situation shown in the displays 2b, 2c, 2d and 2e in figure 2, the previous states can be reached by pressing the clear key (C key). For example, from the states in which single characters are highlighted, the states in which an entire horizontal sequence of characters are highlighted is reached by pressing the C key. Pressing the end key 7 (communication end key) of the portable telephone 1 causes the procedure to go back to the initial display 2a with the text being currently edited.

In figure 3, a similar example with different states of the display means 2 of the portable telephone 1 is shown. In a first display 2g, a text "I like intercommunications" being currently edited in an editing mode, as e.g. a SMS message editing mode, is shown. Pressing the pound key causes a two-dimensional array of characters to be displayed, as shown by display 2h. Pressing the C key 10 or the communication end key 7 in this situation brings the procedure back to display 2g. In the two-dimensional array of characters displayed on the display 2h, the first horizontal sequence of characters is highlighted. Pressing the jog dial 6 selects this first horizontal sequence and the first character of this first horizontal sequence is highlighted, as shown on a display 2i. Scrolling the jog dial 6 up and down causes the single characters in that first horizontal sequence to be highlighted one after the other. For example, scrolling the jog dial 6 one scroll up or eleven scrolls down from the display 2i causes the telephone book symbol to be highlighted as shown on a display 2k. The telephone book symbol is two characters wide (is twice as wide as all other characters). Pressing the jog dial 6 in the situation shown on display 2k causes the telephone book symbol to be selected, as shown on a display 21, so that names and/or telephone numbers may be added to the text being currently edited. Pressing the C key 10 or the communication end key 7 in that situation takes the procedure back to the initial state shown on the display 2g.

Scrolling the jog dial 6 one scroll down from the situation shown on display 2h causes the second horizontal sequence of characters to be highlighted, as shown on display 2m. Scrolling the jog dial 6 one scroll up again causes the first horizontal sequence of characters to be highlighted again, as shown on display 2h. Alternatively, since the two-dimensional array of characters shown on the display only comprises four horizontal lines, the jog dial 6 can be scrolled three scrolls down from the display 2m to cause the first horizontal sequence of characters to be highlighted. Pressing the jog dial 6 in the situation shown in display 2m, in which the second horizontal sequence of characters is highlighted, causes this second horizontal sequence of characters to be selected so that the first character of that second horizontal sequence is highlighted as shown in display 2n. Scrolling the jog dial 6 up and down causes single characters of that second horizontal sequence to be highlighted one after the other. For example, two scrolls up cause the character before the last character of that second horizontal sequence to be highlighted as shown in display 20. Pressing the jog dial 6 in this situation causes the respective character to be selected and added to the text being currently edited. In the display shown in figure 20, the selected character is the "and" character (& symbol), which is added to the current text as shown on display 2p. From the displays 2n and 20, the previous display 2m can be reached by pressing the C key 10. Pressing the communication end key 7 in any of the shown situations brings the display back to the initial text display 2g.

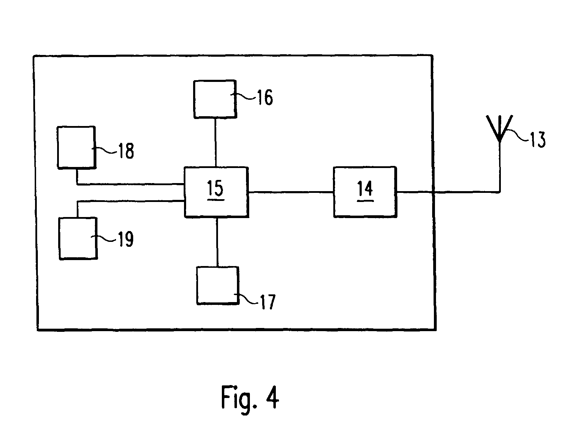

In figure 4, a simple block diagram of a portable communication device for a wireless communication system according to the present invention, as e.g. the portable telephone 1 shown in figure 1 is shown. The communication device according to the present invention comprises an antenna 13 connected to a transmitting and receiving means 14 for communicating with other communication devices and/or base stations of the wireless communication system over an air interface. The transmitting and receiving means 14 is connected to a central processing unit 15 which controls the operation of the communication device. The central processing unit 15 is connected to a display means 16 and a memory means 17 as well as a keypad 18 comprising a plurality of keys and a scrolling means 19, as e.g. a jog dial. The display means 16 corresponds e.g. to the display means 2 of the portable telephone 1 shown in figure 1 and the key pad 18 comprises e.g. all the keys 5, 7 to 12 of the portable telephone 1 shown in figure 1. The scrolling means 19 corresponds e.g. to the jog dial 6 of the portable telephone 1. In the memory means 17, all available characters to be selected and edited in an editing mode of the communication device may be stored, as e.g. the two-dimensional array of characters allocated to the pound key as shown and explained in relation to figures 2 and 3. Activation of the scrolling means 19 by a user, as e.g. up and down scrolling or pressing the jog dial causes corresponding signals to be supplied to the central processing unit 15, which in turn drives the display means 16 to highlight or select corresponding sequences of characters or single characters according to the present invention. After a message has been created in an editing mode of the communication device using the key pad 18 and the scrolling means 19 according to the present invention, the message is either stored in the memory means 17 or another memory means of the communication device to be sent at a later timepoint, or the message is instantly transmitted via the antenna 13 to a receiving device.

It is to be noted, that the communication device schematically shown in figure 4 further comprises a plurality of elements necessary for its operation in a wireless communication system, as e.g. coding/decoding means, modulating/demodulating means, clock means and the like.

## Claims

1. Portable communication device (1) for a wireless communication system, with
a display means (2) for displaying information, and
a scrolling means (6) for scrolling through a menu or other information displayed on the display means (2),
whereby, in an editing mode of said communication device in which characters to be stored and/or to be transmitted can be selected, said display means (2) displays a plurality of characters in a two-dimensional array, whereby one-dimensional sequences of characters are highlighted one after the other upon activating the scrolling means (6) and, after selecting a sequence of characters, single characters in that selected sequence are highlighted one after the other upon activating the scrolling means (6) so that a wanted character can be selected.

2. Portable communication device according to claim 1,
**characterized in,**
that said two-dimensional array displayed on said display means (2) in said editing mode comprises horizontal and vertical sequences of characters, whereby horizontal sequences of characters are highlighted one after the other upon activating the scrolling means (6).

3. Portable communication device according to claim 1,
**characterized in,**
that said two-dimensional array displayed on said display means (2) in said editing mode comprises horizontal and vertical sequences of characters, whereby vertical sequences of characters are highlighted one after the other upon activating the scrolling means (6).

4. Portable communication device according to claim 1, 2 or 3,
**characterized in,**
that said scrolling means (6) is a jog dial.

5. Portable communication device according to claim 4,
**characterized in,**
that upon turning said jog dial one-dimensional sequences of characters are highlighted one after the other in a first or second direction and, after selecting a sequence of characters, single characters are highlighted one after the other in a third or fourth direction, said third and fourth direction being perpendicular to said first and second direction.

6. Portable communication device according to claim 4 or 5,
**characterized in,**
that a sequence of characters is selected by pressing said jog dial.

7. Portable communication device according to one of the claims 1 to 6,
**characterized by**
a keypad comprising a plurality of keys (5, 7-12), whereby in said editing mode said two-dimensional array of characters is allocated to and can be selected by activating a specific key (11).
